(19) Europäisches Patentamt
European Patent Office
Office européen des brevets

(11) **EP 4 768 276 A1**

(12) **EUROPEAN PATENT APPLICATION**

(43) Date of publication:
**01.07.2026 Bulletin 2026/27**

(21) Application number: **25224705.1**

(22) Date of filing: **17.12.2025**

(51) International Patent Classification (IPC):
**B60C 9/18** (2006.01)    **B60C 11/01** (2006.01)
**B60C 11/03** (2006.01)    **B60C 9/28** (2006.01)
**B60C 11/00** (2006.01)

(52) Cooperative Patent Classification (CPC):
**B60C 9/28; B60C 11/0083; B60C 11/01;
B60C 11/0302; B60C 11/0304; B60C 11/0306;**
B60C 2011/0346

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.12.2024 JP 2024231319
31.01.2025 JP 2025015425
31.01.2025 JP 2025015421
31.01.2025 JP 2025015424**

(71) Applicant: **SUMITOMO RUBBER INDUSTRIES,
LTD.
Kobe-shi, Hyogo 651-0072 (JP)**

(72) Inventors:
• **MASAHIRO, NAGASE**
  **Kobe-shi, 651-0072 (JP)**
• **CHISATO, OMORI**
  **Kobe-shi, 651-0072 (JP)**
• **HIROSHI, KIKUCHI**
  **Kobe-shi, 651-0072 (JP)**
• **RENA, ONITSUKA**
  **Kobe-shi, 651-0072 (JP)**

(74) Representative: **Forresters IP LLP
Skygarden
Erika-Mann-Straße 11
80636 München (DE)**

(54) **PNEUMATIC TIRE**

(57) A pneumatic tire (1) includes a first ground contact edge (Te1), a ground contact surface (3a) extending therefrom to a second ground contact edge (Te2), a first side outer surface (6a) extending radially inward therefrom, and a tread portion (3) having a first shoulder land region (5A) demarcated by a first shoulder circumferential groove (4A) and the first ground contact edge. A first virtual line (L1) is a tangent line at an axial midpoint (Pm) of the first shoulder land region inclined at an angle from 74 to 80° and a second virtual line (L2) is a tangent line at a first position (P1) of the first side outer surface inclined at an angle from 36 to 40° relative to the tire radial direction. A radial first distance (t) from the first ground contact edge to the tire equator (C) is 2% to 6% of a ground contacting width (TW).

FIG.1

EP 4 768 276 A1

**Description**

RELATED APPLICATIONS

This application claims the benefit of foreign priority to Japanese Patent Applications No. JP2024-231319, filed December 26, 2024, JP2025-015421, filed January 31, 2025, JP2025-015424, files January 31, 2025, and JP2025-015425, filed January 31, 2025, which are incorporated by reference in its entirety.

FIELD OF THE INVENTION

The present invention relates to a pneumatic tire.

BACKGROUND OF THE INVENITON

Various pneumatic tires having specific profiles have been proposed in the past. Japanese Unexamined Patent Application Publication No. 2020-019400 (Patent Document 1) proposes a pneumatic tire that can achieve both noise performance and low fuel consumption performance by including a profile with a single radius of curvature from a maximum width position to an outer end position in the tire radial direction thereof, for example.

SUMMARY OF THE INVENTION

However, resistances related to the low fuel consumption performance include air resistance during running in addition to rolling resistance, which is improved in the pneumatic tire of Patent Document 1, and further improvement in the air resistance during running has been expected even in the pneumatic tire of Patent Document 1.

The present invention was made in view of the above, and a primary object thereof is to provide a pneumatic tire capable of improving the low fuel consumption performance by decreasing the air resistance during running.

The present invention is a pneumatic tire including a tread portion and a profile, wherein

the profile is defined by an outer surface in a tire meridian section of the pneumatic tire when the pneumatic tire is in a standard state,

the standard state is a state in which the pneumatic tire is mounted on a standard rim, inflated to a standard inner pressure, and loaded with no tire load,

the tread portion includes a first ground contact edge and a second ground contact edge,

the profile includes a ground contact surface of the tread portion extending from the first ground contact edge to the second ground contact edge, and a first side outer surface of one of sidewall portions extending inward in a tire radial direction from the first ground contact edge,

the first side outer surface has a first position defined thereon at a distance of 15% of a tire section height radially inward away from a tire equator on the ground contact surface,

the tread portion has a first shoulder circumferential groove extending in a tire circumferential direction between the tire equator and the first ground contact edge on a side closest to the first ground contact edge, and a first shoulder land region demarcated by the first shoulder circumferential groove and the first ground contact edge,

the ground contact surface has a first virtual line inclined inward in the tire radial direction as it goes outward in a tire axial direction,

the first virtual line is a tangent line at a midpoint in the tire axial direction of the first shoulder land region,

the first virtual line is inclined at a first angle in the range from 74 to 80 degrees with respect to the tire radial direction,

the first side outer surface has a second virtual line inclined to the same side as the first virtual line with respect to the tire radial direction,

the second virtual line is a tangent line at the first position of the first side outer surface,

the second virtual line is inclined at a second angle in the range from 36 to 40 degrees with respect to the tire radial direction,

the ground contact surface has a ground contacting width,

the ground contacting width is a distance in the tire axial direction from the first ground contact edge to the second ground contact edge, and

a first distance in the tire radial direction from the first ground contact edge to the tire equator on the ground contact surface is in the range from 2% to 6% of the ground contacting width.

By having the configuration described above, the pneumatic tire of the present invention can reduce the air resistance during running, and as a result, can improve the low fuel consumption performance.

BRIEF DESCRIPTION OF THE DRAWINGS

FIG. 1 is a tire meridian section showing a profile of a pneumatic tire 1 according to an embodiment of the present invention.
FIG. 2 is an enlarged view of part (A) of FIG. 1.
FIG. 3 is a schematic diagram of a mold for molding the pneumatic tire.
FIG. 4 is a schematic diagram showing a shape of a foot print of the pneumatic tire according to the second embodiment of the present invention.
FIG. 5 is a development view of a tread portion of the pneumatic tire according to the third embodiment of the present invention.

DETAILED DESCRIPTION OF THE INVENTION

An embodiment of the present invention will now be described in conjunction with accompanying drawings.

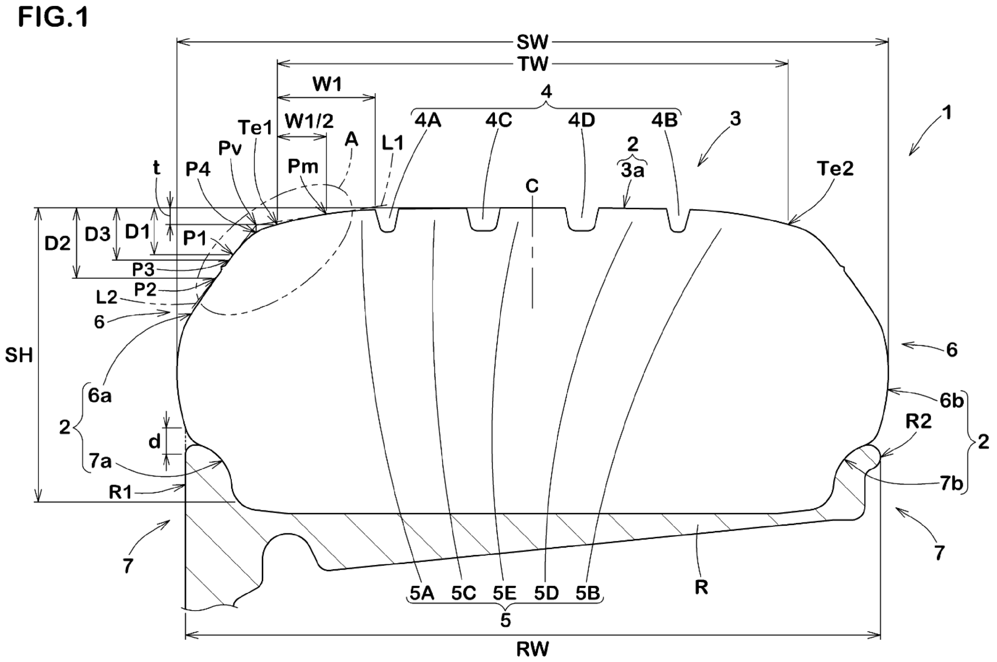

FIG. 1 is a tire meridian section showing a profile 2 of a pneumatic tire 1 according to the present embodiment in a standard state. Here, the term "standard state" refers to a state in which the pneumatic tire 1 is mounted on a standard rim (R), inflated to a standard inner pressure, and loaded with no tire load. Hereinafter, dimensions and the like of various parts of the pneumatic tire 1 are values measured in the standard state unless otherwise noted.
The term "standard rim (R)" refers to a wheel rim specified for the concerned tire by a standard included in a standardization system on which the pneumatic tire 1 is based, for example, the "normal wheel rim" in JATMA, "Design Rim" in TRA, and "Measuring Rim" in ETRTO. When there is no standardization system that includes the standard on which the pneumatic tire 1 is based, the "standard rim (R)" is a wheel rim with the smallest rim diameter and the narrowest rim width on which the pneumatic tire can be mounted without causing air leakage.
The term "standard inner pressure" refers to air pressure specified for the concerned tire by a standard included in a standardization system on which the tire is based, for example, the maximum air pressure in JATMA, the maximum value listed in the "TIRE LOAD LIMITS AT VARIOUS COLD INFLATION PRESSURES" table in TRA, and "INFLATION PRESSURE" in ETRTO. When there is no standardization system that includes the standard on which the pneumatic tire 1 is based, the "standard inner pressure" is the air pressure determined for each tire by the manufacturer and the like.
As shown in FIG. 1, the pneumatic tire 1 is suitable for use as a tire for passenger cars, for example. The pneumatic tire 1 of the present embodiment has the profile 2 defined by an outer surface of the pneumatic tire 1 in the tire meridian section of the pneumatic tire 1 in the standard state. The profile 2 in the present embodiment includes a ground contact surface (3a) of a tread portion 3 extending from a first ground contact edge (Te1) to a second ground contact edge (Te2).
The ground contact surface (3a) has a tire equator (C), which is on a midpoint in a tire axial direction between the first ground contact edge (Te1) and the second ground contact edge (Te2), and a ground contacting width (TW), which is a distance in the tire axial direction from the first ground contact edge (Te1) to the second ground contact edge (Te2), for example. It is preferred that the first ground contact edge (Te1) is located at a distance (t) (first distance (t)) inward in a tire radial direction away from the point of the tire equator (C) on the ground contact surface (3a), i.e., the intersection of the tire equator plane with the ground contact surface (3a).
Here, the "first ground contact edge (Te1)" and the "second ground contact edge (Te2)" refer to the outermost ground contact positions in the tire axial direction when the pneumatic tire 1 in the standard state is in contact with a flat surface with zero camber angle by being loaded with 70% of a standard tire load.
The term "standard tire load" refers to a tire load specified for the concerned tire by a standard included in a standardization system on which the pneumatic tire 1 is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO. When there is no standardization system that includes the standard on which the pneumatic tire 1 is based, the "standard tire load" is a tire load determined for each tire by the manufacturer and the like, as the maximum tire load that can be applied when using the pneumatic tire 1.
The tread portion 3 in the present embodiment has a plurality of circumferential grooves 4 extending in a tire circumferential direction and a plurality of land regions 5 demarcated by the circumferential grooves 4. The circumferential grooves 4 may extend linearly in the tire circumferential direction, or may extend in a zigzag pattern, or may be a mixture of linear and zigzag grooves, for example. The tread portion 3 configured as such helps to achieve both rigidity and a drainage property of the land regions 5.
The circumferential grooves 4 in the present embodiment include a first shoulder circumferential groove (4A) extending in the tire circumferential direction between the tire equator (C) and the first ground contact edge (Te1) on the side closest to the first ground contact edge (Te1). The land regions 5 in the present embodiment includes a first shoulder land region (5A) demarcated by the first shoulder circumferential groove (4A) and the first ground contact edge (Te1).

It is preferred that the ground contact surface (3a) has a first virtual line (L1), which is a tangent line at a midpoint (Pm) in the tire axial direction of the first shoulder land region (5A), inclined inward in the tire radial direction as it goes outward in the tire axial direction. The ground contact surface (3a) configured as such helps to suppress air separation by smoothing the flow of air during running flowing from the tread portion 3 to sidewall portions 6 (described later).

Here, the midpoint (Pm) of the first shoulder land region (5A) is a position that is a distance (W1/2), which is half the maximum width (W1) of the first shoulder land region (5A) in the tire axial direction, axially inward away from the first ground contact edge (Te1).

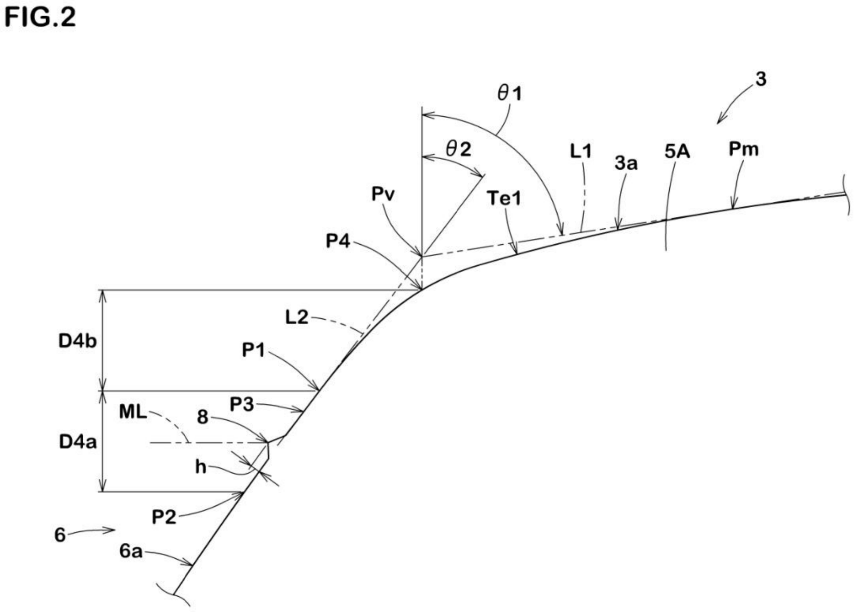

FIG. 2 is an enlarged view of part (A) of FIG. 1. As shown in FIG. 2, the first virtual line (L1) in the present embodiment is inclined at a first angle θ1 with respect to the tire radial direction. It is preferred that the first angle θ1 is equal to or greater than 74 degrees. By setting the first angle θ1 to 74 degrees or more, it is possible that excessive deformation is suppressed at the time of contact with the ground and that the rolling resistance is decreased. From such a point of view, the first angle θ1 is more preferably 76 degrees or more, and even more preferably 77 degrees or more.

It is preferred that the first angle θ1 is equal to or less than 80 degrees. Since the first angle θ1 is 80 degrees or less, the air flows smoothly from the tread portion 3 to the sidewall portions 6 (described later) during running, which suppresses air separation and reduces the air resistance during running. From such a point of view, the first angle θ1 is more preferably 78 degrees or less, and even more preferably 77 degrees or less.

For these reasons, the first angle θ1 is preferably in the range from 74 to 80 degrees, more preferably in the range from 76 to 78 degrees, and even more preferably 77 degrees. It should be noted that the combination of the upper and lower limits of these numerical ranges can be selected arbitrarily.

As shown in FIG. 1, the profile 2 of the present embodiment includes a first side outer surface (6a) of one of the sidewall portions 6 extending inward in the tire radial direction from the first ground contact edge (Te1), and a first bead outer surface (7a) of one of bead portions 7 located inward in the tire radial direction of the first side outer surface (6a).

In the present embodiment, a first position (P1) is defined on the first side outer surface (6a) at a distance (D1) of 15% of a tire section height (SH) radially inward away from the tire equator (C) on the ground contact surface (3a). It is preferred that a second virtual line (L2), which is defined as a tangent line at the first position (P1) of the first side outer surface (6a), is inclined to the same side as the first virtual line (L1) with respect to the tire radial direction. The first side outer surface (6a) configured as such helps to suppress air separation by smoothing the flow of air during running from the tread portion 3 to one of the sidewall portions 6 having the first side outer surface (6a).

As shown in FIG. 2, the second virtual line (L2) in the present embodiment is inclined at a second angle θ2 with respect to the tire radial direction. It is preferred that the second angle θ2 is equal to or greater than 36 degrees. Since the second angle θ2 is 36 degrees or more, the air flows smoothly from the tread portion 3 to the sidewall portions 6 during running, and the air separation is suppressed, thereby, it is possible that the air resistance during running is decreased. From this point of view, the second angle θ2 is more preferably 37 degrees or more, and even more preferably 38 degrees or more.

It is preferred that the second angle θ2 is equal to or less than 40 degrees. By setting the second angle θ2 to 40 degrees or less, the separation of air on the radially outer sides of the sidewall portions 6 is suppressed, therefore, it is possible that the air resistance during running is decreased. From such a point of view, the second angle θ2 is more preferably 39 degrees or less, and even more preferably 38 degrees or less.

For these reasons, the second angle θ2 is preferably in the range from 36 to 40 degrees, more preferably in the range from 37 to 39 degrees, and even more preferably 38 degrees. It should be noted that the combination of the upper and lower limits of these numerical ranges can be selected arbitrarily.

As shown in FIG. 1, it is preferred that the distance (t) between the first ground contact edge (Te1) and the tire equator (C) on the ground contact surface (3a) is 2% or more of the ground contacting width (TW). Since the distance (t) is 2% or more of the ground contacting width (TW), the air flows smoothly from the tread portion 3 to the sidewall portions 6 during running, thereby, it is possible that the air separation is suppressed and that the air resistance during running is decreased. From this point of view, it is more preferred that the distance (t) between the first ground contact edge (Te1) and the tire equator (C) on the ground contact surface (3a) is 3% or more of the ground contacting width (TW).

It is preferred that the distance (t) between the first ground contact edge (Te1) and the tire equator (C) on the ground contact surface (3a) is 6% or less of the ground contacting width (TW). By setting the distance (t) to 6% or less of the ground contacting width (TW), it is possible that excessive deformation during ground contact is suppressed and that the rolling resistance is reduced. From such a point of view, it is more preferred that the distance (t) in the tire radial direction between the first ground contact edge (Te1) and the tire equator (C) on the ground contact surface (3a) is 5% or less of the ground contacting width (TW).

For these reasons, the distance (t) from the first ground contact edge (Te1) to the tire equator (C) is preferably in the range from 2% to 6%, and more preferably in the range from 3% to 5% of the ground contacting width (TW). It should be noted that the combination of the upper and lower limits of these numerical ranges can be selected arbitrarily.

Due to the synergistic effect of the above-described components, the pneumatic tire 1 having the profile 2 of the present embodiment can lower the air resistance during running, and as a result, can improve the low fuel consumption performance.

As a more preferred embodiment, the standard rim (R) has a first rim edge (R1) which is an end on the first ground contact edge (Te1) side, a second rim edge (R2) which is an end on the second ground contact edge (Te2) side, and a maximum width (RW) which is a distance in a rim width direction from the first rim edge (R1) to the second rim edge (R2).

The pneumatic tire 1 of the present embodiment does not have a rim guard in the sidewall portions 6. Since the pneumatic tire 1 configured as such does not have a rim guard which has a large effect on the air resistance, it is possible that the air resistance during running is lowered.

It is preferred that the pneumatic tire 1 has a tire section width (SW) that is 6 mm or more larger (i.e., larger by 6 mm or more) than the maximum width (RW) in the rim width direction of the standard rim (R). It is possible that the pneumatic tire 1 configured as such prevents the standard rim (R) from coming into contact with a curb and the like even without a rim guard and achieves both durability performance and the low fuel consumption performance. It should be noted that the tire section width (SW) is the maximum width in the profile 2, and does not include local protrusions, rim guards, and so on.

It is preferred that a distance (d) in the tire radial direction from the first rim edge (R1) to the first bead outer surface (7a), more specifically from the radially outer end of the first rim edge (R1) to the first bead outer surface (7a) at the axial position of the first rim edge (R1), is 3 mm or less. The first bead outer surface (7a) configured as such suppresses the generation of turbulence between the first rim edge (R1) and the first bead outer surface (7a), and maintains the kinetic energy of the air, thereby, it is possible that the air resistance during running is decreased.

It is preferred that the maximum width (W1) of the first shoulder land region (5A) in the tire axial direction is 20% or more of the ground contacting width (TW). Since the maximum width (W1) of the first shoulder land region (5A) is 20% or more of the ground contacting width (TW), air swirled around while running due to the vehicle is smoothly guided to the first shoulder circumferential groove (4A), therefore, it is possible that the air resistance during running is decreased. Further, by locating the first shoulder circumferential groove (4A) at a position of high ground contact pressure, it helps to increase the driving speed at which hydroplaning occurs. From these points of view, it is more preferred that the maximum width (W1) of the first shoulder land region (5A) is 22% or more of the ground contacting width (TW).

It is preferred that the maximum width (W1) in the tire axial direction of the first shoulder land region (5A) is 30% or less of the ground contacting width (TW). Since the maximum width (W1) of the first shoulder land region (5A) is 30% or less of the ground contacting width (TW), excessive increase in the rigidity of the first shoulder land region (5A) is suppressed, which makes it possible to improve steering stability performance of the pneumatic tire 1, and also helps to improve the drainage property in axial outer areas. From such a point of view, it is more preferred that the maximum width (W1) of the first shoulder land region (5A) is 28% or less of the ground contacting width (TW).

For these reasons, the maximum width (W1) in the tire axial direction of the first shoulder land region (5A) is preferably in the range from 20% to 30%, more preferably in the range from 22% to 28%, of the ground contacting width (TW). It should be noted that the combination of the upper and lower limits of these numerical ranges can be selected arbitrarily.

It is preferred that a second position (P2) and a third position (P3) are defined on the first side outer surface (6a). The second position (P2) is a position radially inward from the tire equator (C) on the ground contact surface (3a) by a distance (D2) of 25% of the tire section height (SH), and the third position (P3) is a position radially inward from the tire equator (C) on the ground contact surface (3a) by a distance (D3) of 19 mm. In the present embodiment, a fourth position (P4) is defined on the first side outer surface (6a) that is located radially inside a virtual intersection (Pv) between the first virtual line (L1) and the second virtual line (L2).

As shown in FIG. 2, it is preferred that a distance (D4a) in the tire radial direction from the first position (P1) to the second position (P2) is equal to a distance (D4b) in the tire radial direction from the first position (P1) and the fourth position (P4). In this case, the first position (P1) is an intermediate position in the tire radial direction between the second position (P2) and the fourth position (P4). The first position (P1) configured as such is suitable as a representative point of a radially outer area of the first side outer surface (6a).

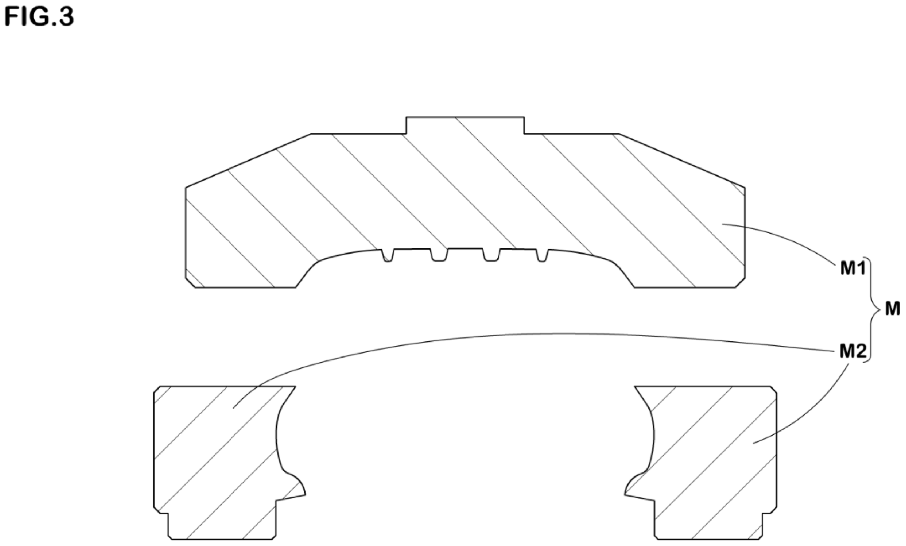

FIG. 3 is a schematic diagram of a mold (M) for molding the pneumatic tire 1. As shown in FIG. 1 or FIG. 3, the mold (M) in the present embodiment includes a tread mold (M1) for molding the tread portion 3 and side molds (M2) for molding the sidewall portions 6. The pneumatic tire 1 has parting lines (ML) corresponding to boundaries between the tread mold (M1) and the side molds (M2), for example.

As shown in FIG. 2, it is preferred that the parting lines (ML) each include a step portion 8 having a height (h) of 0.4 mm or less. It is possible that the step portions 8 configured as such suppress the occurrence of cracks originating from the parting lines (ML), thereby, it is possible that the durability performance of the pneumatic tire 1 is improved.

Further, by setting the height (h) of each of the step portions 8 to 0.4 mm or less, an increase in the air resistance during running can be suppressed, therefore, it is possible that the low fuel consumption performance of the pneumatic tire 1 is improved. Here, the height (h) of each of the step portions 8 is the maximum protruding height in a direction perpendicular to the first side outer surface (6a) from the first side outer surface (6a) on both sides in the tire radial direction of the each of the step portions 8.

It is preferred that the step portion 8 of each of the parting lines (ML) is located between the second position (P2) and the third position (P3). Since the step portions 8 are positioned radially outside the second position (P2), it is possible that the decrease in air flow velocity near the maximum width position of the first side outer surface (6a) is suppressed, thereby, it is possible that the air resistance during running is decreased.

Since the step portions 8 are positioned radially inside the third position (P3), it is possible to suppress a decrease in the air flow velocity near the buttress in the radially outer area of the first side outer surface (6a), thereby, it is possible that the air resistance during running is reduced.

As shown in FIG. 1, the pneumatic tire 1 of the present embodiment has a specified tread portion position in the tire axial direction for mounting the tire on a vehicle regarding inner and outer sides of the tread portion with respect to the vehicle. The first ground contact edge (Te1) in the present embodiment is located on the outer side of the vehicle when mounted on the vehicle. It is preferred that the second ground contact edge (Te2) is located on the inner side of the vehicle when mounted on the vehicle. In the pneumatic tire 1 configured as such, at least the profile 2 on the outer side of the vehicle, which has a large effect on the air resistance, can be defined to have a shape that reduces the air resistance, therefore, it is possible that the low fuel consumption performance is improved.

The circumferential grooves 4 in the present embodiment include a second shoulder circumferential groove (4B) extending in the tire circumferential direction on the side closest to the second ground contact edge (Te2) between the tire equator (C) and the second ground contact edge (Te2). The circumferential grooves 4 further include a first crown circumferential groove (4C) extending in the tire circumferential direction between the tire equator (C) and the first shoulder circumferential groove (4A), and a second crown circumferential groove (4D) extending in the tire circumferential direction between the tire equator (C) and the second shoulder circumferential groove 4B, for example. The circumferential grooves 4 configured as such have excellent drainage properties and are useful for improving wet performance of the pneumatic tire 1. It should be noted that the number of the circumferential grooves 4 is not limited to four, but may be three or less, or five or more, for example.

The land regions 5 of the present embodiment have a second shoulder land region (5B) demarcated by the second shoulder circumferential groove (4B) and the second ground contact edge (Te2). It is preferred that the land regions 5 include a first middle land region (5C) demarcated by the first shoulder circumferential groove (4A) and the first crown circumferential groove (4C), and a second middle land region (5D) demarcated by the second shoulder circumferential groove (4B) and the second crown circumferential groove (4D). The land regions 5 include a crown land region (5E) demarcated by the first crown circumferential groove (4C) and the second crown circumferential groove (4D), for example. The land regions 5 configured as such have excellent rigidity and are useful for improving the steering stability performance of the pneumatic tire 1.

The profile 2 in the present embodiment includes a second side outer surface (6b) of the sidewall portion 6 extending inward in the tire radial direction from the second ground contact edge (Te2), and a second bead outer surface (7b) of the bead portion 7 located inward in the tire radial direction of the second side outer surface (6b).

The profile 2 may be formed symmetrically in the tire axial direction with the tire equator (C) as the center thereof, for example. In this case, the ground contact surface (3a), the second side outer surface (6b), and the second bead outer surface (7b) of the second shoulder land region (5B) are symmetrical to the ground contact surface (3a), the first side outer surface (6a), and the first bead outer surface (7a) of the first shoulder land region (5A), respectively. The pneumatic tire 1 configured as such can reduce the air resistance on the inner side of the vehicle during running, thereby, it is possible that the low fuel consumption performance is further improved.

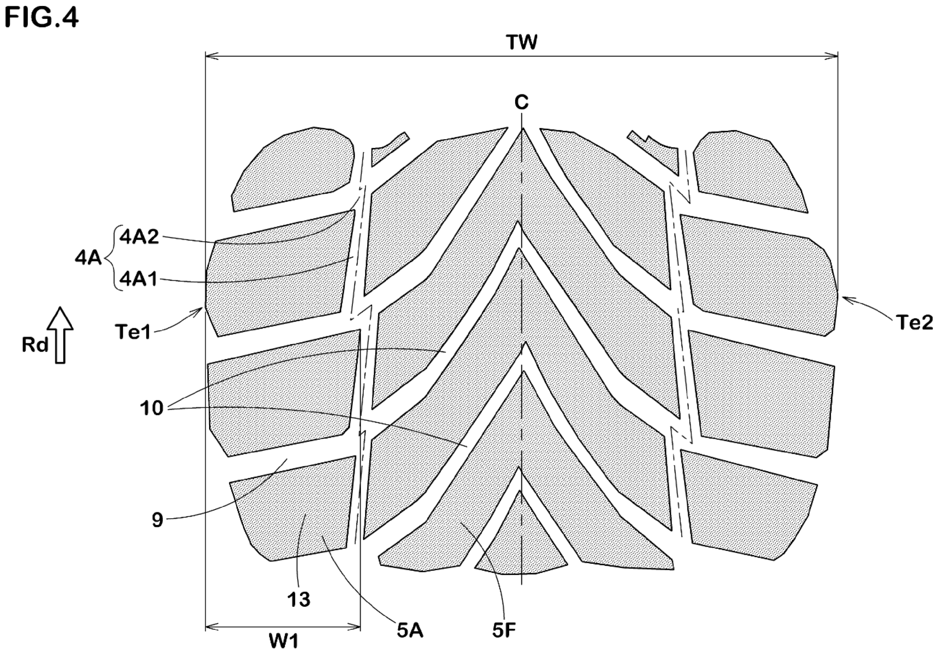

FIG. 4 is a schematic diagram showing the shape of the foot print of the pneumatic tire 1 according to the second embodiment of the present invention. The pneumatic tire 1 of the second embodiment includes the tread portion 3 bound with an intended tire rotational direction (Rd). The first shoulder circumferential groove (4A) of the second embodiment includes a plurality of first oblique portions (4A1) each extending from the inside to the outside in the tire axial direction as it goes from a heel-side (i.e., leading side) to a toe-side (i.e., trailing side) in the tire rotational direction (Rd), and a plurality of second oblique portions (4A2) each connecting a respective one of pairs of the first oblique portions (4A1) adjacent to each other in the tire circumferential direction.

Consequently, the first oblique portions (4A1) and the second oblique portions (4A2) are arranged alternately in the tire circumferential direction. Each of the second oblique portions (4A2) has a length in the tire circumferential direction smaller than a length of each of the first oblique portions (4A1) in the tire circumferential direction in the second embodiment. It is possible that the first shoulder circumferential groove (4A) configured as such achieves both high rigidity and the drainage property in the first shoulder land region (5A).

The first shoulder land region (5A) of the second embodiment has a plurality of first shoulder axial grooves 9 extending in the tire axial direction obliquely with respect to the tire circumferential direction from the first shoulder circumferential groove (4A) to the first ground contact edge (Te1). It is preferred that each of the first shoulder axial grooves 9 communicates with a respective one of the second oblique portions (4A2).

The first shoulder axial grooves 9 configured as such can allow air and water in the first shoulder circumferential groove (4A) to be smoothly discharged from the first ground contact edge (Tel) during running, therefore, it is possible that the air resistance during running is decreased and thus that the drainage property is improved. Further, the first shoulder land region (5A) includes a plurality of first shoulder blocks 13 demarcated by the first shoulder circumferential groove (4A), the first tread edge (Te1), and the first shoulder axial grooves 9. Each of the first shoulder blocks 13 has a width (W1) on the heel-side in the tire rotational direction (Rd) larger than that on the toe-side in the tire rotational direction, thereby suppressing slippage at the heel-side, which tends to slip significantly when the tire leaves the ground. Therefore, it is possible that the pneumatic tire 1 of the second embodiment achieves both the low fuel consumption performance and anti-wear performance.

The second oblique portions (4A2) are inclined to the same side as the first oblique portions (4A1) with respect to the tire axial direction, for example. The second oblique portions (4A2) configured as such, in cooperation with the first shoulder axial grooves 9 and first crown axial grooves 10 provided in a crown land region (5F), serve to decrease the air resistance during running and improve the drainage property. It should be noted that the second oblique portions (4A2) are not limited to this embodiment, and may be inclined to a side opposite to the first oblique portions (4A1), or may extend along the tire axial direction, for example.

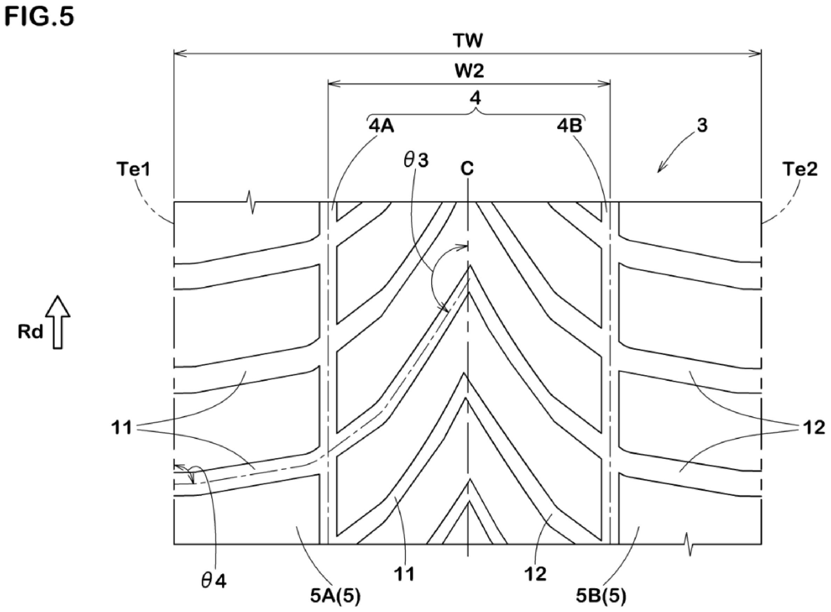

FIG. 5 is a development view of the tread portion 3 according to the third embodiment of the present invention. As shown in FIG. 5, the pneumatic tire 1 of the third embodiment has the tread portion 3 bound with the intended tire rotational direction (Rd). The tread portion 3 of the third embodiment has a plurality of first oblique grooves 11 each extending obliquely with respect to the tire circumferential direction from the tire equator (C) to the first ground contact edge (Tel) so as to cross the first shoulder circumferential groove (4A). The first oblique grooves 11 configured as such can allow air and water at and around the tire equator (C) to be smoothly discharged from the first ground contact edge (Tel) during running, thereby, it is possible that the air resistance during running is lowered and thus that the drainage property is improved.

Each of the first oblique grooves 11 of the third embodiment has a third angle θ3 which is an angle on the heel-side in the tire rotational direction (Rd) with respect to the tire equator (C), and a fourth angle θ4 which is an angle on the heel-side in the tire rotational direction (Rd) with respect to the first ground contact edge (Tel). Each of the first oblique grooves 11 has the third angle θ3 and the fourth angle θ4, and has a bent shape having a plurality of bent portions, for example. The first oblique grooves 11 are not limited to this embodiment, and may extend linearly or may be curved, for example.

As shown in FIG. 1 and FIG. 3, it is preferred that the third angle θ3 (in degree), the fourth angle θ4 (in degree), the distance (t) (in millimeter) between the first ground contact edge (Tel) and the tire equator (C) on the ground contact surface (3a), and the ground contacting width (TW) (in millimeter) satisfy the following Expression 1.

[Expression 1]

$$0.5 \leq \frac{\theta 3}{\theta 4} \times \frac{t}{TW} \times 10 \leq 2.5 \cdots (Expression\ 1)$$

The pneumatic tire 1 configured as such can reduce the air resistance during running while maintaining good rolling resistance, and is also excellent in the drainage property. Therefore, it is possible that the pneumatic tire 1 of the third embodiment achieves both the low fuel consumption performance and the wet performance.

In a more preferred embodiment, the third angle θ3 is an obtuse angle of 100 degrees or greater. Since the third angle θ3 is set to 100 degrees or more, it is possible that air and water at and around the tire equator (C) are smoothly discharged from the first ground contact edge (Tel). From this point of view, the third angle θ3 is more preferably 120 degrees or more, and even more preferably 130 degrees or more.

It is preferred that the third angle θ3 is 170 or less. By setting the third angle θ3 to 170 degrees or smaller, the rigidity in the vicinity of the tire equator (C) can be maintained, and thus it is possible that the steering stability performance of the pneumatic tire 1 is improved. From this point of view, the third angle θ3 is more preferably 165 degrees or less, and even more preferably 160 degrees or less.

For these reasons, the third angle θ3 is preferably in the range from 100 to 170 degrees, more preferably in the range from 120 to 165 degrees, and even more preferably in the range from 130 to 160 degrees. It should be noted that the combination of the upper and lower limits of these numerical ranges can be selected arbitrarily.

It is preferred that the fourth angle θ4 is equal to or greater than 10 degrees. By setting the fourth angle θ4 to 10 degrees or more, the rigidity of the first shoulder land region (5A) can be maintained, and thus the steering stability of the pneumatic tire 1 can be improved. From this point of view, the fourth angle θ4 is more preferably 15 degrees or greater, and even more preferably 20 degrees or greater.

It is preferred that the fourth angle θ4 is an acute angle of 89 degrees or less. By setting the fourth angle θ4 to 89 degrees or less, it is possible that air and water at and around the tire equator (C) is smoothly discharged from the first ground contact edge (Tel). From this point of view, the fourth angle θ4 is more preferably 60 degrees or less, and even more preferably 50 degrees or less.

For these reasons, the fourth angle θ4 is preferably in the range from 10 to 89 degrees, more preferably in the range from 15 to 60 degrees, and even more preferably in the range from 20 to 50 degrees. It should be noted that the combination of the upper and lower limits of these numerical ranges can be selected arbitrarily.

As shown in FIG. 5, it is preferred that a maximum distance (W2) in the tire axial direction from a center line in a width direction of the first shoulder circumferential groove (4A) to a center line in a width direction of the second shoulder circumferential groove (4B) is 50% or less of the ground contacting width (TW). By setting the maximum distance (W2) to 50% or less of the ground contacting width (TW), the rigidity of the first shoulder land region (5A) and the second shoulder land region (5B) is increased, the amount of skid during running is reduced, and thus the anti-wear performance of the pneumatic tire 1 can be improved.

Therefore, it is possible that the pneumatic tire 1 of the present embodiment achieves both the low fuel consumption performance and the anti-wear performance. From such a point of view, it is more preferred that the maximum distance (W2) in the tire axial direction from the center line of the first shoulder circumferential groove (4A) to the center line of the second shoulder circumferential groove (4B) is 45% or less of the ground contacting width (TW).

While detailed description has been made of the present invention according to an especially preferred embodiment, the present invention can be embodied in various forms without being limited to the illustrated embodiment.

[Examples]

Pneumatic tires of size 215/45R20 having the profile shown in FIG. 1 were made by way of test according to the specifications on Table 1. The test pneumatic tires in the standard state were mounted on a drum testing machine and then the rolling resistance of the test tires was measured according to the force method of ISO28580. The results of the rolling resistance test are expressed as an index based on Reference 1 being 100, wherein a larger numerical value indicates a smaller rolling resistance.

Further, by using pneumatic tire models of the same size as the test pneumatic tires, an aerodynamic simulation of the front wheels when the tire models are mounted on a passenger car vehicle model was performed, and the air resistance coefficients of the test tires were determined. The results of the air resistance test are expressed as an index based on the Reference 1 being 100, wherein a larger index indicates a smaller air resistance during running.

The test results are shown in Table 1.

Table 1 (1/2)

| | | Ref. 1 | Ref. 2 | Ref. 3 | EX. 1 |
|---|---|---|---|---|---|
| First angle θ1 of First virtual line | [degree] | 78 | 73 | 78 | 78 |
| Second angle θ2 of Second virtual line | [degree] | 43 | 45 | 48 | 38 |
| Distance (t) from First ground contact edge to Tire equator/ Ground contacting width (TW) | [%] | 5 | 7 | 5 | 5 |
| Presence or Absence of Rim guard | | Presence | Presence | Presence | Presence |
| Distance (d) from First rim edge to First bead outer surface | [mm] | 10.5 | 10.5 | 10.5 | 10.5 |
| Location of Step portion | | Between Second and Third positions | Between Second and Third positions | Between Second and Third positions | Between Second and Third positions |
| Rolling resistance | [index] | 100 | 97 | 100 | 100 |
| Air resistance | [index] | 100 | 101 | 99 | 102 |
| Low fuel consumption performance | [index] | 200 | 198 | 199 | 202 |

Table 1 (2/2)

| | | EX. 2 | EX. 3 | EX. 4 | EX. 5 |
|---|---|---|---|---|---|
| First angle θ1 of First virtual line | [degree] | 78 | 78 | 78 | 78 |
| Second angle θ2 of Second virtual line | [degree] | 38 | 38 | 38 | 38 |

(continued)

| | | EX. 2 | EX. 3 | EX. 4 | EX. 5 |
|---|---|---|---|---|---|
| Distance (t) from First ground contact edge to Tire equator/ Ground contacting width (TW) | [%] | 5 | 5 | 5 | 5 |
| Presence or Absence of Rim guard | | Absence | Absence | Absence | Absence |
| Distance (d) from First rim edge to First bead outer surface | [mm] | 10.5 | 1.2 | 1.2 | 1.2 |
| Location of Step portion | | Between Second and Third positions | Between Second and Third positions | Radially inside of Second position | Radially outside of Third position |
| Rolling resistance | [index] | 101 | 101 | 101 | 101 |
| Air resistance | [index] | 120 | 124 | 119 | 120 |
| Low fuel consumption performance | [index] | 221 | 225 | 220 | 221 |

From the test results, it was confirmed that the test tires in Examples decreased the air resistance during running while maintaining the rolling resistance at the same level as the test tires in References and thus that the low fuel consumption performance, which is evaluated as the sum of the rolling resistance and the air resistance, was improved.

[Statement of Invention]

The present invention includes the following aspects.

[Description of Reference Signs]

1      pneumatic tire
3      tread portion
3a     ground contact surface
4A     first shoulder circumferential groove
5A     first shoulder land region
6a     first side outer surface

**Claims**

1.   A pneumatic tire (1) comprising a tread portion (3) and a profile (2), wherein

the profile (2) is defined by an outer surface in a tire meridian section of the pneumatic tire (1) when the pneumatic tire (1) is in a standard state,
the standard state is a state in which the pneumatic tire (1) is mounted on a standard rim (R), inflated to a standard inner pressure, and loaded with no tire load,
the tread portion (3) includes a first ground contact edge (Te1) and a second ground contact edge (Te2),
the profile (2) includes a ground contact surface (3a) of the tread portion (3) extending from the first ground contact edge (Te1) to the second ground contact edge (Te2), and a first side outer surface (6a) of one of sidewall portions (6) extending inward in a tire radial direction from the first ground contact edge (Te1),
the first side outer surface (6a) has a first position (P1) defined thereon at a distance (D1) of 15% of a tire section height (SH) radially inward away from a tire equator (C) on the ground contact surface (3a),
the tread portion (3) has a first shoulder circumferential groove (4A) extending in a tire circumferential direction between the tire equator (C) and the first ground contact edge (Te1) on a side closest to the first ground contact edge (Te1), and a first shoulder land region (5A) demarcated by the first shoulder circumferential groove (4A) and the first ground contact edge (Te1),

the ground contact surface (3a) has a first virtual line (L1) inclined inward in the tire radial direction as it goes outward in a tire axial direction,

the first virtual line (L1) is a tangent line at a midpoint (Pm) in the tire axial direction of the first shoulder land region (5A),

the first virtual line (L1) is inclined at a first angle (θ1) in the range from 74 to 80 degrees with respect to the tire radial direction,

the first side outer surface (6a) has a second virtual line (L2) inclined to the same side as the first virtual line (L1) with respect to the tire radial direction,

the second virtual line (L2) is a tangent line at the first position (P1) of the first side outer surface (6a),

the second virtual line (L2) is inclined at a second angle (θ2) in the range from 36 to 40 degrees with respect to the tire radial direction,

the ground contact surface (3a) has a ground contacting width (TW),

the ground contacting width (TW) is a distance in the tire axial direction from the first ground contact edge (Te1) to the second ground contact edge (Te2), and

a first distance (t) in the tire radial direction from the first ground contact edge (Te1) to the tire equator (C) on the ground contact surface (3a) is in the range from 2% to 6% of the ground contacting width (TW).

2. The pneumatic tire (1) according to claim 1 further comprising a tire section width (SW) larger than a maximum width (RW) in a rim width direction of the standard rim by 6 mm or more.

3. The pneumatic tire (1) according to claim 1 or 2, wherein

the profile (2) further includes a first bead outer surface (7a) of one of bead portions (7) located radially inside the first side outer surface (6a),

the standard rim (R) has a first rim edge (R1) on the first ground contact edge (Te1) side, and

a distance (d) in the tire radial direction from a radially outer end of the first rim edge (R1) to the first bead outer surface (7a) at an axial position of the first rim edge (R1) is 3 mm or less when the pneumatic tire (1) is in the standard state.

4. The pneumatic tire (1) according to any one of claims 1 to 3 further comprising a parting line (ML) wherein

the parting line (ML) corresponds to a boundary between a tread mold (M1) for molding the tread portion (3) and a side mold (M2) for molding the one of sidewall portions (6), and

the parting line (ML) includes a step portion (8) having a height (h) of 0.4 mm or less.

5. The pneumatic tire (1) according to claim 4, wherein

the first side outer surface (6a) has a second position (P2) and a third position (P3) defined thereon,

the second position (P2) is a position radially inward from the tire equator (C) on the ground contact surface (3a) by a distance (D2) of 25% of a tire section height (SH),

the third position (P3) is a position radially inward from the tire equator (C) on the ground contact surface (3a) by a distance (D3) of 19 mm, and

the step portion (8) is located between the second position (P2) and the third position (P3).

6. The pneumatic tire (1) according to claim 5, wherein

the first side outer surface (6a) has a fourth position (P4) defined thereon,

the fourth position (P4) is located radially inside a virtual intersection (Pv) between the first virtual line (L1) and the second virtual line (L2), and

the first position (P1) is a midpoint in the tire radial direction between the second position (P2) and the fourth position (P4).

7. The pneumatic tire (1) according to any one of claims 1 to 6, wherein

the tread portion has an asymmetric tread pattern with respect to the tire equator,

the tread portion position for mounting the pneumatic tire (1) on a vehicle is specified regarding inner and outer sides of the tread portion (3) with respect to the vehicle, and

the first ground contact edge (Te1) is located on the outer side of the vehicle when the pneumatic tire (1) is mounted on the vehicle.

8. The pneumatic tire (1) according to any one of claims 1 to 7, wherein the sidewall portions (6) are not provided with a rim guard .

9. The pneumatic tire (1) according to any one of claims 1 to 8, wherein a maximum width (W1) in the tire axial direction of the first shoulder land region (5A) is in the range from 20% to 30% of the ground contacting width (TW).

10. The pneumatic tire (1) according to any one of claims 1 to 9, wherein

the tread portion (3) is bound with an intended tire rotational direction (Rd), and
the first shoulder land region (5A) has a plurality of first shoulder axial grooves (9) extending in the tire axial direction obliquely from a heel-side to a toe-side in the tire rotational direction from the first shoulder circumferential groove (4A) to the first ground contact edge (Tel).

11. The pneumatic tire (1) according to claim 10, wherein

the first shoulder circumferential groove (4A) includes a plurality of first oblique portions (4A1) each extending from the inside to the outside in the tire axial direction as it goes from the heel-side to the toe-side in the tire rotational direction (Rd), and a plurality of second oblique portions (4A2) each connecting a respective one of pairs of the first oblique portions (4A1) adjacent to each other in the tire circumferential direction, and
each of the first shoulder axial grooves (9) communicates with a respective one of the second oblique portions (4A2).

12. The pneumatic tire (1) according to claim 11, wherein

each of the first oblique grooves (4A1) has a third angle ($\theta3$) which is an angle on the heel-side in the tire rotational direction (Rd) with respect to the tire equator (C), and a fourth angle ($\theta4$) which is an angle on the heel-side in the tire rotational direction (Rd) with respect to the first ground contact edge (Te1), and
the third angle ($\theta3$) in degree, the fourth angle ($\theta4$) in degree, the first distance (t) in millimeter from the first ground contact edge (Tel) to the tire equator (C) on the ground contact surface (3a), and the ground contacting width (TW) in millimeter satisfy the following Expression 1:

$$0.5 \leq \frac{\theta3}{\theta4} \times \frac{t}{TW} \times 10 \leq 2.5 \cdots (Expression\ 1).$$

13. The pneumatic tire (1) according to any one of claims 1 to 12, wherein

the tread portion (3) further includes a second shoulder circumferential groove (4B) extending in the tire circumferential direction between the tire equator (C) and the second ground contact edge (Te2) on a side closest to the second ground contact edge (Te2), and
a maximum distance (W2) in the tire axial direction from a center line of the first shoulder circumferential groove (4A) to a center line of the second shoulder circumferential groove (4B) is 50% or less of the ground contacting width (TW).

# FIG.1

EP 4 768 276 A1

FIG.2

**FIG.3**

# FIG.4

EP 4 768 276 A1

# FIG.5

EP 4 768 276 A1

# EUROPEAN SEARCH REPORT

**Application Number**

EP 25 22 4705

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/331047 A1 (KAGAYA KEISUKE [JP]) 19 October 2023 (2023-10-19) | 1,8,9,13 | INV. B60C9/18 |
| Y | * paragraph [0014] - paragraph [0025] * | 2-4,7, | B60C11/01 |
| | * paragraph [0035] - paragraph [0036] * | 10-13 | B60C11/03 |
| A | * paragraph [0053] - paragraph [0055] * * figures * | 5,6 | B60C9/28 B60C11/00 |
| | ----- | | |
| X | EP 3 127 713 B1 (BRIDGESTONE CORP [JP]) 12 September 2018 (2018-09-12) | 1,8,9,13 | |
| Y | * paragraph [0007] - paragraph [0010] * * paragraph [0026] - paragraph [0032] * * paragraph [0038] - paragraph [0039] * * paragraph [0075] * * paragraph [0086] * * figures * | 2-4,12 | |
| | ----- | | |
| Y | EP 4 105 039 A1 (SUMITOMO RUBBER IND [JP]) 21 December 2022 (2022-12-21) | 7,10-13 | |
| A | * abstract * | 8 | |
| | * paragraph [0068] - paragraph [0069] * * paragraph [0092] - paragraph [0094] * * paragraph [0100] - paragraph [0101] * * paragraph [0105] * * figures * | | **TECHNICAL FIELDS SEARCHED (IPC)** B60C |
| | ----- | | |
| Y | JP 2023 091123 A (TOYO TIRE CORP) 30 June 2023 (2023-06-30) * abstract; figures * | 2-4 | |
| | ----- | | |
| Y | EP 4 328 048 A1 (SUMITOMO RUBBER IND [JP]) 28 February 2024 (2024-02-28) * abstract; figures * | 2-4 | |
| | ----- | | |

The present search report has been drawn up for all claims

| Place of search | Date of completion of the search | Examiner |
|---|---|---|
| Munich | 26 March 2026 | Avisse, Marylène |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 4705

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2026

| Patent document cited in search report | | Publication date | Patent family member(s) | | Publication date |
|---|---|---|---|---|---|
| US 2023331047 | A1 | 19-10-2023 | CN | 115776950 A | 10-03-2023 |
| | | | CN | 115996855 A | 21-04-2023 |
| | | | DE | 112021002999 T5 | 16-03-2023 |
| | | | DE | 112021003123 T5 | 25-05-2023 |
| | | | JP | 7623602 B2 | 29-01-2025 |
| | | | JP | 7633541 B2 | 20-02-2025 |
| | | | JP | WO2022049865 A1 | 10-03-2022 |
| | | | JP | WO2022049866 A1 | 10-03-2022 |
| | | | US | 2023331047 A1 | 19-10-2023 |
| | | | US | 2024217269 A1 | 04-07-2024 |
| | | | WO | 2022049865 A1 | 10-03-2022 |
| | | | WO | 2022049866 A1 | 10-03-2022 |
| EP 3127713 | B1 | 12-09-2018 | CN | 106232383 A | 14-12-2016 |
| | | | EP | 3127713 A1 | 08-02-2017 |
| | | | JP | 6537496 B2 | 03-07-2019 |
| | | | JP | WO2015159538 A1 | 13-04-2017 |
| | | | US | 2017028788 A1 | 02-02-2017 |
| | | | WO | 2015159538 A1 | 22-10-2015 |
| EP 4105039 | A1 | 21-12-2022 | EP | 4105039 A1 | 21-12-2022 |
| | | | JP | 7694177 B2 | 18-06-2025 |
| | | | JP | 2022190895 A | 27-12-2022 |
| | | | US | 2022402308 A1 | 22-12-2022 |
| JP 2023091123 | A | 30-06-2023 | JP | 7759790 B2 | 24-10-2025 |
| | | | JP | 2023091123 A | 30-06-2023 |
| EP 4328048 | A1 | 28-02-2024 | EP | 4328048 A1 | 28-02-2024 |
| | | | US | 2024066922 A1 | 29-02-2024 |

EPO FORM P0459

For more details about this annex : see Official Journal of the European Patent Office, No. 12/82

**REFERENCES CITED IN THE DESCRIPTION**

**Patent documents cited in the description**

- JP 2024231319 A
- JP 2025015421 A
- JP 2025015424 A
- JP 2025015425 A
- JP 2020019400 A